# EUROPEAN PATENT SPECIFICATION

(11) **EP 2 937 611 B1**
(45) Date of publication and mention of the grant of the patent: **18.04.2018**
(21) Application number: 13865586.5
(22) Date of filing: 16.12.2013
(51) Int. Cl.: F16L 33/01, F16L 33/28, F16L 33/00, F16L 23/16, F16L 11/133, B32B 25/04, F16L 23/024, B32B 27/12, B32B 27/32, B32B 1/08, F16L 11/08, F16L 11/12, F16L 58/18

(54) **MARINE HOSE AND MANUFACTURING METHOD THEREFOR**
MEERESSCHLAUCH UND HERSTELLUNGSVERFAHREN DAFÜR
TUYAU MARIN ET SON PROCÉDÉ DE FABRICATION

(30) Priority: 21.12.2012 JP 2012278910
(43) Date of publication of application: 28.10.2015
(73) Proprietor: The Yokohama Rubber Co., Ltd., Minato-ku Tokyo 105-8685 (JP)
(72) Inventor: IEMOTO, Akihiro, Hiratsuka-shi Kanagawa 254-8601 (JP); SHIMANOE, Satoshi, Hiratsuka-shi Kanagawa 254-8601 (JP)
(74) Representative: Dilg, Haeusler, Schindelmann Patentanwaltsgesellschaft mbH
(86) International application number: PCT/JP2013/083594
(87) International publication number: WO 2014/098022

(56) References cited:
- GB-A- 1 351 602
- JP-A- H0 634 083
- JP-A- 2003 194 264
- JP-A- 2003 194 264
- JP-A- 2005 344 827
- JP-A- 2006 144 878
- JP-A- 2011 080 523
- JP-A- 2011 080 523
- US-A- 4 366 842
- US-A1- 2006 201 566

## Description

### TECHNICAL FIELD

The present invention relates to a marine hose and a manufacturing method therefor, and more specifically relates to a marine hose capable of more reliably preventing the elution of components contained in the inner surface rubber layer into the fluid being transported and a manufacturing method therefor.

### BACKGROUND

Crude oil and various other fluids are transported by marine hoses that are extended between and connect marine tankers and land facilities. Fluids are transported by a marine hose while in contact with the inner surface rubber layer, so minute quantities of components contained in the inner surface rubber layer can be eluted into the fluid. There is concern that if the fluid is a chemical such as methanol or ethanol or the like, the elution of the components into the fluid could cause the problem of reduction in the quality of the fluid.

To solve this problem, a marine hose provided with a resin layer on the inner peripheral side of the inner surface rubber layer, structured so that the fluid does not contact the inner side rubber layer has been proposed (for example, see Patent Document 1). In this proposed marine hose, the resin layer together with the inner surface rubber layer extends to the outer side edge of the connection fitting. Therefore, the transported fluid only contacts the resin layer and basically does not contact the inner surface rubber layer, which is effective for solving the problem. However, when two marine hoses are connected together via connection fittings, it is envisaged that if the resin layer has peeled at the outer side edge of the connection fitting or at the portion where the two resin layers are butting together, the transported fluid can penetrate to the inner surface rubber layer and contact it, so it is desirable that a countermeasure be taken against this.

### PRIOR ART DOCUMENT

### Patent Document

Patent Document 1: Japanese Unexamined Patent Application Publication No. 2011-80523A
Patent Document 2: United States Patent No. 4 366 842 discloses a hose formed of reinforced elastomeric material and including a fitting at each end comprising a flange butt connected to a cylindrical nipple. The inner tube and inner reinforcing plies extend through the bore of the fitting and are adhered to the end face of the flange of the fitting. Intermediate reinforcing plies extend over the cylindrical nipple and are forceably retained by anchoring means which extend over annular grooves provided in the fitting. An outer cover layer of elastomeric material completes the hose.

### SUMMARY OF THE INVENTION

### Problem to be Solved by the Invention

It is an object of the present invention to provide a marine hose capable of more reliably preventing the elution of components contained in the inner surface rubber layer into the fluid being transported and a manufacturing method therefor.

### MEANS TO SOLVE THE PROBLEM

The marine hose according to the present invention to achieve the above object is a marine hose including a hose body that is formed from an inner surface rubber layer, a reinforcing layer formed on the outer peripheral side of the inner surface rubber layer, and a cover rubber layer formed on the outer peripheral side of the reinforcing layer, and a connection fitting that includes a flange portion provided at both ends in a longitudinal direction of the hose body, the connection fitting including a connection end face and a cylindrical nipple portion that has a first end side connected to the flange portion, wherein the inner peripheral side of the inner surface rubber layer and the nipple portion are covered with a single resin layer, and only the resin layer extends, is folded back and bonded via an adhesive layer to the connection end face of the flange portion.

The method of manufacturing a marine hose according to the present invention includes the steps of: inserting a resin film into a cylindrical nipple portion of a connection fitting that includes a flange portion that has a connection end face and the nipple portion that has a first end side connected to the flange portion, so that the resin film covers and is applied to the inner peripheral surface of the nipple portion so that the resin film projects from both ends in the longitudinal direction of the connection fitting; folding back the resin film that projects from a first end side of the connection fitting so that it is applied to the connection end face of the flange portion via an adhesive layer; inserting the connection fitting into a mandrel and setting the connection fitting in a predetermined position; then placing another resin film on the outer peripheral side of the mandrel so as to overlap with the resin film that projects from a second end side of the connection fitting; and successively layering members on the outer peripheral side of the resin film to form a hose body that includes an inner surface rubber layer, reinforcing layers disposed on the outer peripheral side of the inner surface rubber layer, a cover rubber layer disposed on the outer peripheral side of the reinforcing layer, to form a molding with the connection fittings disposed on both ends in the longitudinal direction of the hose body; then vulcanizing the molding to form a single resin layer in which the inner peripheral side of the inner surface rubber layer and the nipple portion is covered by the resin layer, and only the resin layer extends to the connection end face of the flange portion.

### EFFECT OF THE INVENTION

According to the present invention, the inner peripheral sides of the inner surface rubber layer and the nipple portion are covered with the resin layer, so the fluid transported by the marine hose does not contact the inner surface rubber layer. Moreover, the resin layer extends to the connection end face of the flange portion of the connection fitting, so when marine hoses are joined together via the connection fittings, the resin layers facing each other are compression bonded. Therefore, the resin layer does not peel on the connection end face of the connection fitting, and the resin layers are joined together in a watertight manner, so it is possible to prevent the fluid from contacting the inner surface rubber layer at the connecting portions of the marine hose. Therefore, it is possible to reliably prevent reduction in quality of the fluid.

In addition, the resin layer that extends to the connection end face of the flange portion also functions as a sealing member (gasket) that watertightly seals the connection end faces of the connection fittings, so providing a separate sealing member can be omitted.

### BRIEF DESCRIPTION OF THE DRAWINGS

- FIG. 1: is a vertical cross-sectional view illustrating the top half of an end portion in a longitudinal direction of a marine hose according to the present invention.
- FIG. 2: is a front view of a connection end surface of the marine hose of FIG. 1.
- FIG. 3: is an explanatory view illustrating a process of applying the resin layer to the connection fitting as viewed in a vertical section.
- FIG. 4: is an explanatory view illustrating a process of inserting the connection fitting to which the resin layer has been applied into a mandrel as viewed in a vertical section.
- FIG. 5: is an explanatory view illustrating a process of arranging a resin film on the outer peripheral side of the mandrel as viewed in a vertical section.
- FIG. 6: is an explanatory view illustrating a process of layering a member to form the inner side rubber layer on the outer peripheral side of the resin film as viewed in a vertical section.
- FIG. 7: is a vertical cross-sectional view illustrating the top half of an end portion in the longitudinal direction of a molded body of the marine hose formed with the remaining members layered on the outer peripheral side of the inner surface rubber layer.
- FIG. 8: is a vertical cross-sectional view illustrating marine hoses connected via connection fittings.

### BEST MODE FOR CARRYING OUT THE INVENTION

The following is a description of the marine hose and manufacturing method therefor according to the present invention based on the embodiments illustrated in the drawings.

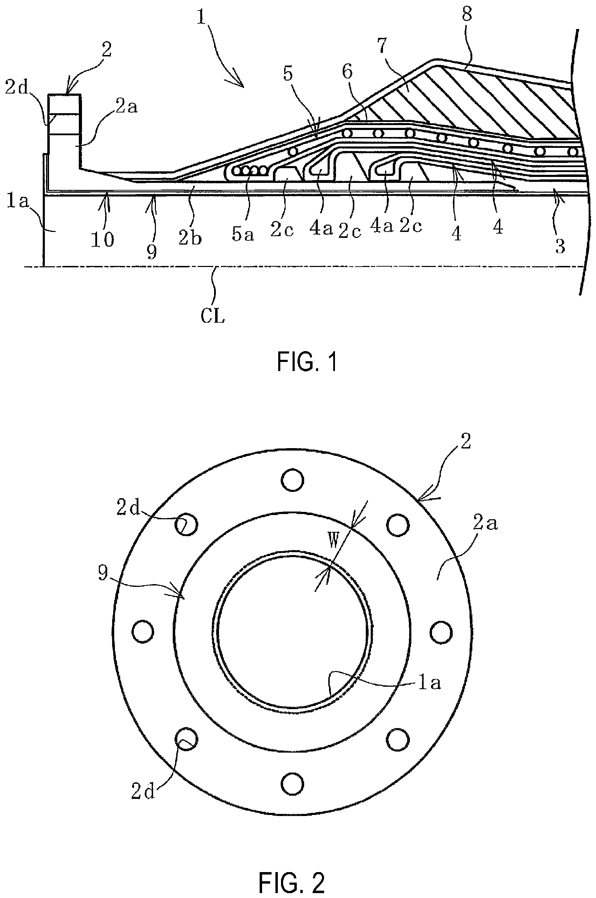

A marine hose 1 according to the present invention illustrated in FIGS. 1 and 2 includes a connection fitting 2 for connecting to another marine hose at both ends in the longitudinal direction. The connection fitting 2 includes a disk-shaped flange portion 2a, and a cylindrical-shaped nipple portion 2b that is connected at a first end side thereof to the flange portion 2a. The outer side in the hose longitudinal direction of the flange portion 2a corresponds to the connection end face. A plurality of bolt holes 2d arranged as required is provided on the flange portion 2a.

On the outer peripheral side of the nipple portion 2b, an inner surface rubber layer 3, an inner side carcass layer 4, a spiral wire reinforcing layer 5, an outer side carcass layer 6, a buoyant layer 7, and a cover rubber layer 8 are layered in that order toward the outer peripheral side. The hose body is configured by layering these members on the outer peripheral side of the nipple portion 2b. The connection fitting 2 is disposed on both ends of the hose body.

In addition, in the marine hose according to the present invention, the inner peripheral side of the inner surface rubber layer 3 and the nipple portion 2b is covered with a resin layer 9 over the whole range. The resin layer 9 extends to the connection end face of the flange portion 2a (the vertical face of the flange portion 2a in FIG. 1). The width W in the radial direction of the resin layer 9 on the connection end face of the flange portion 2a is, for example, from 20 mm to 80 mm both inclusive.

The resin layer 9 and the connection fitting 2 are bonded with an adhesive layer 10. Note that the same material as the inner surface rubber layer 3 can be used for the adhesive layer 10. In other words, a structure in which the whole range of the inner peripheral side of the nipple portion 2b is covered by the inner surface rubber layer 3, and the inner surface rubber layer 3 extends to the connection end face of the flange portion 2a can be used.

A fluid flow path 1a is on the inner peripheral side of the resin layer 9. The chain dotted line CL indicated on the drawing is the center line (axial center line) that extends in the longitudinal direction of the marine hose 1.

The inner side carcass layer 4 is formed by layering a plurality of layer members in which a plurality of organic fiber cords arranged biased at an inclination of a predetermined angle with respect to the hose longitudinal direction center line CL is covered with rubber, so that the cords of the layer members intersect between layers. A first end of the inner side carcass layer 4 is fixed by engaging fixing wires 4a thereof to a fixing ring 2c that projects from the surface of the nipple portion 2b. In this embodiment, two layers of inner side carcass layer 4 are provided.

The spiral wire reinforcing layer 5 is formed by winding spirally metal wires at predetermined intervals in the hose longitudinal direction between rubber layers. A first end of the spiral wire reinforcing layer 5 is fixed by engaging fixing wires 5a thereof to the fixing ring 2c that projects from the surface of the nipple portion 2b.

The outer side carcass layer 6 is formed by layering a plurality of layer members in which a plurality of organic fiber cords arranged biased at an inclination of a predetermined angle with respect to the hose longitudinal direction center line CL is covered with rubber, so that the cords of the layer members intersect between layers, the same as for the inner side carcass layer 4. The buoyant layer 7 is formed using a material with a low specific gravity that generates buoyancy such as foamed rubber, sponge, or the like. The cover rubber layer 8 is formed from a water impermeable material such as rubber or the like, with, for example, a line pattern or the like with excellent visibility applied to the surface thereof.

The material in which the components contained in the inner surface rubber layer 3 are not eluted into the fluid being transported is selected for the resin layer 9. Also, preferably, the material having excellent abrasion resistance and adhesion to the inner surface rubber layer 3 is selected. For example, the resin layer 9 is formed from ultra high molecular weight polyethylene which has excellent corrosion resistance. If ultra high molecular weight polyethylene with a viscosity average molecular weight of 1 million or higher is used, it is possible to prevent foaming in the vulcanization step, so it is particularly preferable.

The layer thickness of the resin layer 9 is, for example, from 0.1 mm to 0.5 mm both inclusive. If the layer thickness is less than 0.1 mm, it is difficult to obtain sufficient durability and the like, and if the layer thickness is more than 0.5 mm, it can easily adversely affect the flexibility of the hose.

The material having excellent adhesion to the resin layer 9 is selected for the inner surface rubber layer 3, for example, a rubber composition made from natural rubber and styrene-butadiene rubber (SBR) can be used. When this rubber composition is used, a strong fusion bond can be formed with the ultra high molecular weight polyethylene resin layer 9. Preferably, the weight ratio of natural rubber in this rubber composition is 50% or higher.

The inner surface rubber layer 3 does not directly contact the fluid transported by the marine hose 1, but preferably, it is made of a material with excellent corrosion resistance to the fluid, to take into consideration unforeseen cases in which the resin layer 9 is damaged. A rubber composition made from natural rubber and SBR has excellent corrosion resistance to various fluids, so from this point of view also, the inner surface rubber layer 3 is preferably formed from a rubber composition that is a blend of natural rubber and SBR.

Next, the procedure of manufacturing this marine hose 1 is described.

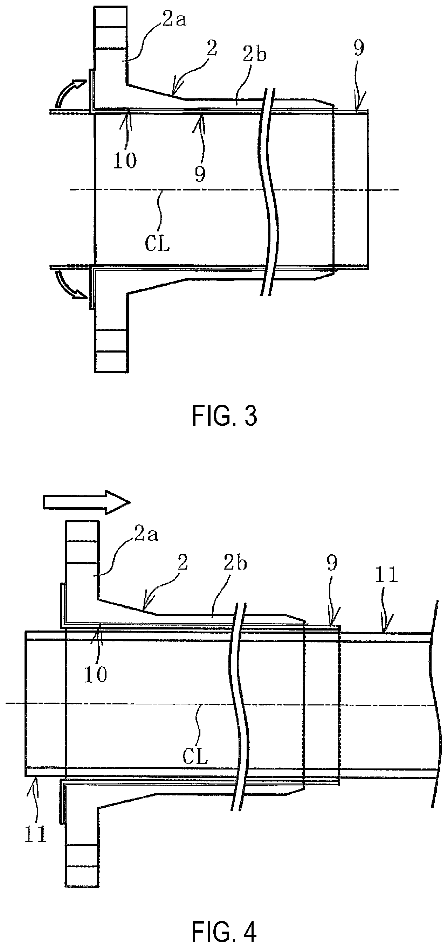

First, as illustrated in FIG. 3, adhesive rubber that corresponds to the adhesive layer 10 is applied to the inner circumferential surface of the nipple portion 2b. Next, a resin film 9 is inserted into the nipple portion 2b, and the resin film 9 is applied so as to cover the inner circumferential surface of the nipple portion 2b via the adhesive layer 10. The resin film 9 is applied so as to project from both ends in the longitudinal direction of the connection fitting 2.

The resin film 9 that is projected from a first end side of the connection fitting 2 is folded back and applied to the connection end face of the flange portion 2a via the adhesive layer 10. Adhesive rubber that corresponds to the adhesive layer 10 may be applied in advance over the range of the connection end face of the flange portion 2a over which the resin film 9 is to be folded back.

Next, as illustrated in FIG. 4, a mandrel 11 is inserted into the connection fitting 2 and set at a predetermined position. The resin film that projects from a second end in the longitudinal direction of the connection fitting 2 is mounted on the outer peripheral surface of the mandrel 11.

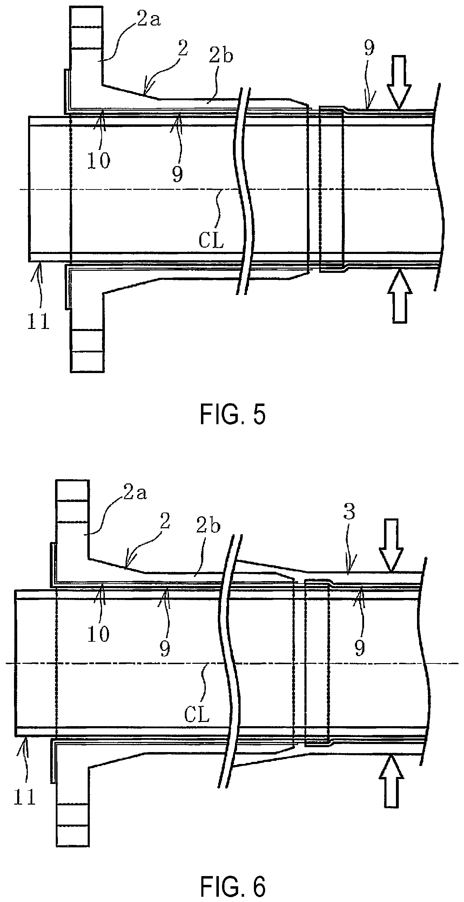

Next, as illustrated in FIG. 5, a separate resin film 9 is placed on the outer peripheral surface of the mandrel 11 so as to overlap with the resin film 9 that projects from the second end of the connection fitting 2. The allowance for overlapping the resin films 9 together is about, for example, from 10 mm to 100 mm both inclusive. This resin film 9 is wrapped around the outer peripheral surface of the mandrel 11 to the necessary length in the longitudinal direction.

Next, as illustrated in FIG. 6, the member that corresponds to the inner surface rubber layer 3 is layered onto the outer peripheral side of the mandrel 11. In other words, the member that corresponds to the inner surface rubber layer 3 is layered onto the outer peripheral surface of the second end side end portion of the nipple portion 2b and the outer peripheral surface of the resin film 9 that projects from the second end side of the nipple portion 2b.

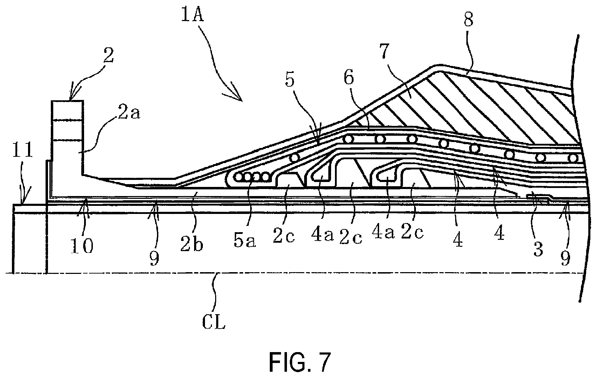

Next, the members corresponding to the inner side carcass layer 4, the spiral wire reinforcing layer 5, the outer side carcass layer 6, the buoyant layer 7, and the cover rubber layer 8 are layered in that order onto the outer peripheral surface of the mandrel 11, the same as the normal manufacturing method of a conventional marine hose. In this way, the hose body is formed having the inner surface rubber layer 3, the inner side carcass layer 4, the spiral wire reinforcing layer 5, the outer side carcass layer 6, the buoyant layer 7, and the cover rubber layer 8 disposed on the outer peripheral surface of the mandrel 11, as illustrated in FIG. 7. Accordingly, the molding 1A with the connection fittings 2 arranged on both ends in the longitudinal direction of the hose body is formed.

Next, the molding 1A is vulcanized in the same way as in the normal method of manufacturing a conventional marine hose, to complete the marine hose 1 as illustrated in FIG. 1. In the vulcanization process, the resin film 9 is melted, thereby eliminating the joint in the resin film 9 to produce the single layer of the resin layer 9. Also, the resin layer 9 and the inner surface rubber layer 3 are strongly fusion bonded together. In this way, a structure is formed in which the resin layer 9 is formed by the resin film 9 covering the inner peripheral side of the inner surface rubber layer 3 and the nipple portion 2b, and the resin layer 9 extends to the connection end face of the flange portion 2a.

In the molding 1A as illustrated in FIG. 7, the resin film 9 that extends to the connection end face of the flange portion 2a can be pressed onto the connection end face using a pressing tool. Therefore, by vulcanizing the molding 1A in this pressed state, it is possible to very strongly bond the resin film 9 (resin layer 9) to the connection end face of the flange portion 2a via the adhesive layer 10. Therefore, this is extremely effective for preventing peeling of the resin layer 9.

According to the present invention, the whole range on the inner peripheral side of the inner surface rubber layer 3 and the nipple portion 2b are covered with the resin layer 9, so the fluid transported by the marine hose 1 does not contact the inner surface rubber layer 3. Therefore, even when the fluid is a chemical such as methanol, ethanol, or the like, it is possible to prevent components contained in the inner surface rubber layer 3 from being eluted into the fluid. Of course, the components contained in the resin layer 9 are not eluted into the fluid.

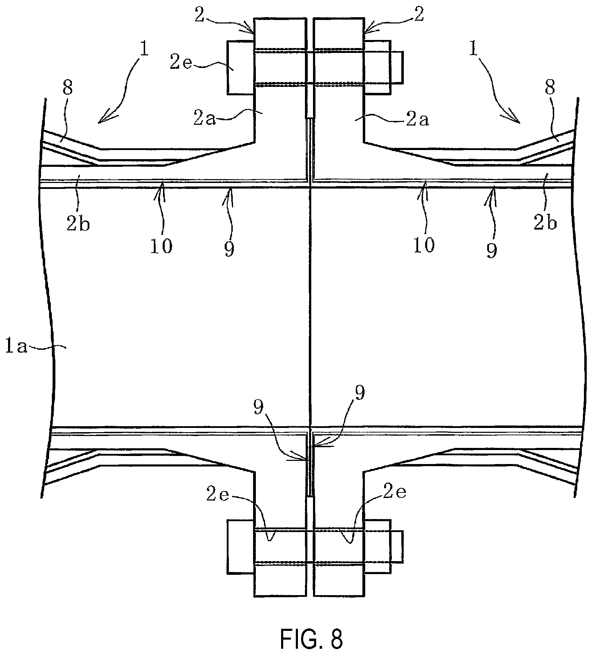

Moreover, the resin layer 9 extends to the connection end face of the flange portion 2a of the connection fitting 2. As illustrated in FIG. 8, when the marine hoses 1 are joined together via the connection fittings 2 using fasteners 2e such as bolts or the like inserted into the bolt holes 2d, the mutually opposing resin layers 9 are compression bonded. Therefore, the resin layers 9 on the connection end faces of the connection fittings 2 do not peel, and the resin layers 9 are connected to each other in a watertight manner. Therefore, it is also possible to prevent the fluid in the connecting portion of the marine hoses 1 from contacting the inner surface rubber layer 3, and reliably preventing the components contained in the inner surface rubber layer 3 from being eluted into the fluid. Therefore, reduction in the quality of the fluid can be more reliably prevented.

In addition, the resin layer 9 that extends to the connection end face of the flange portion 2a also functions as a sealing member (gasket) that watertightly seals the connection end face of the connection fittings 2. Therefore, it is not necessary to provide a separate seal member.

In the connecting portions of the marine hose 1, preferably, the width W in the radial direction of the resin layer 9 on the connection end face of the flange portion 2a is not less than 20 mm, in order to reliably prevent ingress of the fluid to the inner surface rubber layer 3. On the other hand, if the width W in the radial direction of the resin layer 9 is too large, the amount of compression deformation of the resin layer 9 that extends to the connection end face of the flange portion 2a in the connecting portions of the marine hose 1 will be too small, so the sealing effect will be reduced. Therefore, the width W in the radial direction of the resin layer 9 in the connection end face of the flange portion 2a is preferably from 20 mm to 80 mm both inclusive as stated above.

The number of the members (reinforcing layers) and the types of the members layered in the structure of the marine hose 1 can be varied in accordance with the required specification. Therefore, the present invention can be applied to marine hoses 1 with various structures, and is not limited to the structure described in the embodiments. Also, the present invention can also be applied to both submarine hoses and floating hoses.

### Reference numerals:

1 Marine hose
1A Molding
1a Fluid flow path
2 Connection fitting
2a Flange portion
2b Nipple portion
2c Fixing ring
2d Bolt hole
2e Fastener
3 Inner surface rubber layer
4 Inner side carcass layer
4a Fixing wire
5 Spiral wire reinforcing layer
5a Fixing wire
6 Outer side carcass layer
7 Buoyant layer
8 Cover rubber layer
9 Resin layer (resin film)
10 Adhesive layer
11 Mandrel

## Claims

1. A marine hose (1) comprising:
a hose body that is formed from an inner surface rubber layer (3), a reinforcing layer (5) formed on an outer peripheral side of the inner surface rubber layer (3), and a cover rubber layer (8) formed on an outer peripheral side of the reinforcing layer (5); and
a connection fitting (2) provided at both ends in a longitudinal direction of the hose body, the connection fitting (2) including a flange portion (2a) that has a connection end face and a cylindrical nipple portion (2b) that has a first end side connected to the flange portion (2a);
**characterised by** an inner peripheral side of the inner surface rubber layer (3) and the nipple portion (2b) being covered with a single resin layer (9), and only the resin layer (9) extending and being folded back to the connection end face of the flange portion (2a) and the resin layer (9) being bonded to the connection end face via an adhesive layer (10).

2. The marine hose (1) according to claim 1, wherein
a width in a radial direction of the resin layer (9) on the connection end face of the flange portion (2a) is from 20 mm to 80 mm both inclusive.

3. The marine hose (1) according to claim 1 or 2, wherein
the resin layer (9) is formed from ultra high molecular weight polyethylene.

4. The marine hose (1) according to any one of claims 1 to 3, wherein
a layer thickness of the resin layer (9) is from 0.1 mm to 0.5 mm both inclusive.

5. A method of manufacturing a marine hose (1), comprising the steps of:
inserting a resin film (9) into a cylindrical nipple portion (2b) of a connection fitting (2) that includes a flange portion (2a) that has a connection end face and the nipple portion (2b) that has a first end side connected to the flange portion (2a), so that the resin film (9) covers and is applied to an inner peripheral surface of the nipple portion (2b) and the resin film (9) projects from both ends in a longitudinal direction of the connection fitting (2);
folding back the resin film (9) that projects from a first end side of the connection fitting (2) so that it is applied to the connection end face of the flange portion (2a) via an adhesive layer (10), inserting the connection fitting (2) into a mandrel (11) and setting the connection fitting (2) in a predetermined position;
then placing another resin film (9) on an outer peripheral side of the mandrel (11) so as to overlap with the resin film (9) that projects from a second end side of the connection fitting (2), and successively layering members on the outer peripheral side of the resin film (9) to form a hose body that includes an inner surface rubber layer (3), a reinforcing layer (5) disposed on the outer peripheral side of the inner surface rubber layer (3), and a cover rubber layer (8) disposed on the outer peripheral side of the reinforcing layer (5), to form a molding (1A) with the connection fittings (2) disposed on both ends in the longitudinal direction of the hose body; and
then vulcanizing the hose body to form a single resin layer (9) in which the inner peripheral side of the inner surface rubber layer (3) and the nipple portion (2b) are covered by the resin layer (9), and only the resin layer (9) extends to the connection end face of the flange portion (2a).

6. The method of manufacturing a marine hose (1) according to claim 5, wherein the width in the radial direction of the resin layer (9) on the connection end face of the flange portion (2a) is from 20 mm to 80 mm both inclusive.

7. The method of manufacturing a marine hose (1) according to claim 5 or 6, wherein
a film formed from ultra high molecular weight polyethylene is used as the resin film (9).

8. The method of manufacturing a marine hose (1) according to any one of claims 5 to 7, wherein
the layer thickness of the resin layer is from 0.1 mm to 0.5 mm both inclusive.

## Patentansprüche

1. Seeschlauch (1), umfassend:
einen Schlauchkörper, der aus einer Innenflächen-Kautschukschicht (3), einer auf einer Außenumfangsseite der Innenflächen-Kautschukschicht (3) gebildeten Verstärkungsschicht (5) und einer auf einer Außenumfangsseite der Verstärkungsschicht (5) gebildeten Abdeckkautschukschicht (8) gebildet wird, und
eine an beiden Enden in Längsrichtung des Schlauchkörpers bereitgestellte Anschlussarmatur (2), wobei die Anschlussarmatur (2) einen Flanschabschnitt (2a) umfasst, der eine Anschlussendfläche und einen zylindrischen Nippelabschnitt (2b) aufweist, der eine mit dem Flanschabschnitt (2a) verbundene erste Endseite aufweist;
**gekennzeichnet durch** eine Innenumfangsseite der Innenflächen-Kautschukschicht (3) und den Nippelabschnitt (2b), die mit einer einzelnen Harzschicht (9) bedeckt sind, wobei lediglich die Harzschicht (9) bis zur Anschlussendfläche des Flanschabschnitts (2a) verläuft und zu dieser umgefaltet ist, und wobei die Harzschicht (9) mittels einer Haftschicht (10) mit der Anschlussendfläche verbunden wird.

2. Seeschlauch (1) nach Anspruch 1, wobei
eine Breite in Radialrichtung der Harzschicht (9) auf der Anschlussendfläche des Flanschabschnitts (2a) zwischen jeweils einschließlich 20 mm und 80 mm beträgt.

3. Seeschlauch (1) nach Anspruch 1 oder 2, wobei
die Harzschicht (9) aus ultrahochmolekularem Polyethylen gebildet wird.

4. Seeschlauch (1) nach einem der Ansprüche 1 bis 3, wobei
eine Schichtdicke der Harzschicht (9) zwischen jeweils einschließlich 0,1 mm und 0,5 mm beträgt.

5. Verfahren zur Herstellung eines Seeschlauchs (1), umfassend die folgenden Schritte:
Einlegen einer Harzschicht (9) in einen zylindrischen Nippelabschnitt (2b) einer Anschlussarmatur (2), die einen Flanschabschnitt (2a) einschließt, der eine Anschlussendfläche und den Nippelabschnitt (2b) aufweist, der eine mit dem Flanschabschnitt (2a) verbundene erste Endseite aufweist, sodass die Harzschicht (9) eine Innenumfangsfläche des Nippelabschnitts (2b) bedeckt und auf diese aufgetragen wird und die Harzschicht (9) in Längsrichtung der Anschlussarmatur (2) an beiden Enden hervorsteht;
Umfalten der Harzschicht (9), die aus einer ersten Endseite der Anschlussarmatur (2) hervorsteht, sodass sie an der Anschlussendfläche des Flanschabschnitts (2a) mittels einer Haftschicht (10) aufgetragen wird, Einlegen der Anschlussarmatur (2) in ein Spindelelement (11) und Einstellen der Anschlussarmatur (2) in einer vorher festgelegten Position;
anschließendes Anbringen einer weiteren Harzschicht (9) auf einer Außenumfangsseite des Spindelelements (11), sodass diese mit der Harzschicht (9) überlappt, die von einer zweiten Endseite der Anschlussarmatur (2) hervorsteht, und nacheinander Schichten von Elementen auf die Außenumfangsseite der Harzschicht (9), um einen Schlauchkörper zu bilden, der eine Innenflächen-Kautschukschicht (3), eine auf der Außenumfangsseite der Innenflächen-Kautschukschicht (3) angeordnete Verstärkungsschicht (5) und eine auf der Außenumfangsseite der Verstärkungsschicht (5) angeordnete Abdeckkautschukschicht (8) einschließt, um ein Formteil (1A) mit den an beiden Enden in der Längsrichtung des Schlauchkörpers angeordneten Anschlussarmaturen (2) zu bilden, und
anschließendes Vulkanisieren des Schlauchkörpers, um eine einzelne Harzschicht (9) auszubilden, in welcher die Innenumfangsseite der Innenflächen-Kautschukschicht (3) und der Nippelabschnitt (2b) von der Harzschicht (9) abgedeckt sind und lediglich die Harzschicht (9) zu der Anschlussendfläche des Flanschabschnitts (2a) verläuft.

6. Verfahren zur Herstellung eines Seeschlauchs (1) gemäß Anspruch 5, wobei die Breite in Radialrichtung der Harzschicht (9) auf der Anschlussendfläche des Flanschabschnitts (2a) zwischen jeweils einschließlich 20 mm und 80 mm beträgt.

7. Verfahren zur Herstellung eines Seeschlauchs (1) gemäß Anspruch 5 oder 6, wobei ein aus ultrahochmolekularem Polyethylen gebildeter Belag als Harzschicht (9) verwendet wird.

8. Verfahren zur Herstellung eines Seeschlauchs (1) gemäß einem der Ansprüche 5 bis 7, wobei die Schichtdicke der Harzschicht zwischen jeweils einschließlich 0,1 mm und 0,5 mm beträgt.

## Revendications

1. Tuyau marin (1) comprenant :
un corps de tuyau qui est formé d'une couche de caoutchouc de surface interne (3), d'une couche de renfort (5) formée sur un côté périphérique externe de la couche de caoutchouc de surface interne (3) et d'une couche de caoutchouc de couverture (8) formée sur un côté périphérique externe de la couche de renfort (5) ; et
un raccord de connexion (2) prévu au niveau des deux extrémités dans une direction longitudinale du corps de tuyau, le raccord de connexion (2) contenant une partie bride (2a) qui présente une face d'extrémité de connexion et une partie de raccord cylindrique (2b) qui présente un premier côté d'extrémité connecté à la partie bride (2a) ;
**caractérisé par** un côté périphérique interne de la couche de caoutchouc de surface interne (3) et la partie de raccord (2b) qui sont recouverts d'une couche de résine unique (9) et uniquement la couche de résine (9) qui s'étend et est repliée vers la face d'extrémité de connexion de la partie bride (2a) et la couche de résine (9) qui est liée à la face d'extrémité de connexion par le biais d'une couche adhésive (10).

2. Tuyau marin (1) selon la revendication 1, dans lequel
une largeur dans une direction radiale de la couche de résine (9) sur la face d'extrémité de connexion de la partie bride (2a) est comprise entre 20 mm et 80 mm, l'une et l'autre des valeurs incluses.

3. Tuyau marin (1) selon la revendication 1 ou 2, dans lequel
la couche de résine (9) est formée à partir d'un polyéthylène de masse moléculaire ultra-élevée.

4. Tuyau marin (1) selon l'une quelconque des revendications 1 à 3, dans lequel
une épaisseur de couche de la couche de résine (9) est comprise entre 0,1 mm et 0,5 mm, l'une et l'autre des valeurs incluses.

5. Procédé de fabrication d'un tuyau marin (1), comprenant les étapes consistant à :
insérer un film de résine (9) dans une partie de raccord cylindrique (2b) d'un raccord de connexion (2) qui comprend une partie bride (2a) qui présente une face d'extrémité de connexion et la partie de raccord (2b) qui présente un premier côté d'extrémité connecté à la partie bride (2a), de sorte que le film de résine (9) recouvre et soit appliqué sur une surface périphérique interne de la partie de raccord (2b) et que le film de résine (9) fasse saillie depuis les deux extrémités dans une direction longitudinale du raccord de connexion (2) ;
replier le film de résine (9) qui fait saillie depuis un premier côté d'extrémité du raccord de connexion (2) de sorte qu'il est appliqué sur la face d'extrémité de connexion de la partie bride (2a) par le biais d'une couche adhésive (10), insérer le raccord de connexion (2) dans un mandrin (11) et placer le raccord de connexion (2) dans une position prédéfinie ;
puis placer un autre film de résine (9) sur un côté périphérique externe du mandrin (11) de manière à chevaucher le film de résine (9) qui fait saillie depuis un second côté d'extrémité du raccord de connexion (2) et superposer successivement les éléments sur le côté périphérique externe du film de résine (9) afin de former un corps de tuyau qui comprend une couche de caoutchouc de surface interne (3), une couche de renfort (5) disposée sur le côté périphérique externe de la couche de caoutchouc de surface interne (3) et une couche de caoutchouc de couverture (8) disposée sur le côté périphérique externe de la couche de renfort (5), afin de former un moulage (1A) avec les raccords de connexion (2) disposés sur les deux extrémités dans la direction longitudinale du corps de tuyau ; et
ensuite vulcaniser le corps de tuyau afin de former une couche de résine (9) unique dans laquelle le côté périphérique interne de la couche de caoutchouc de surface interne (3) et la partie de raccord (2b) sont recouverts par la couche de résine (9) et uniquement la couche de résine (9) s'étend jusqu'à la face d'extrémité de connexion de la partie bride (2a).

6. Procédé de fabrication d'un tuyau marin (1) selon la revendication 5, dans lequel la largeur dans la direction radiale de la couche de résine (9) sur la face d'extrémité de connexion de la partie bride (2a) est comprise entre 20 mm et 80 mm, l'une et l'autre des valeurs incluses.

7. Procédé de fabrication d'un tuyau marin (1) selon la revendication 5 ou 6, dans lequel un film formé à partir d'un polyéthylène de masse moléculaire ultra-élevée est utilisé comme film de résine (9).

8. Procédé de fabrication d'un tuyau marin (1) selon l'une quelconque des revendications 5 à 7, dans lequel
l'épaisseur de couche de la couche de résine (9) est comprise entre 0,1 mm et 0,5 mm, l'une et l'autre des valeurs incluses.
